# EUROPEAN PATENT APPLICATION

(11) **EP 1 475 881 A2**
(43) Date of publication of application: **10.11.2004**
(21) Application number: 04010785.6
(22) Date of filing: 06.05.2004
(51) Int. Cl.: H02M 3/337, H02M 7/219

(54) **Power converter**

(30) Priority: 09.05.2003 JP 2003132153
(71) Applicant: CANON KABUSHIKI KAISHA, Tokyo 146 (JP)
(72) Inventor: Suzui, Masaki, Ohta-ku Tokyo (JP); Takehara, Nobuyoshi, Ohta-ku, Tokyo (JP)
(74) Representative: Böckelen, Rainer

(57) **Abstract**

A power converter includes a transformer, a full-bridge rectifying circuit which is located on the secondary side of the transformer and has at least a pair of self-arc-suppressing elements which are driven while being inverted, connection means which connects the negative-pole-side connection line on the primary side of the transformer to that on the secondary side of the transformer, and a control circuit which is commonly used to drive circuits on the primary and secondary sides of the transformer. The self-arc-suppressing elements are driven by the control circuit.

## Description

### FIELD OF THE INVENTION

The present invention relates to a power converter.

### BACKGROUND OF THE INVENTION

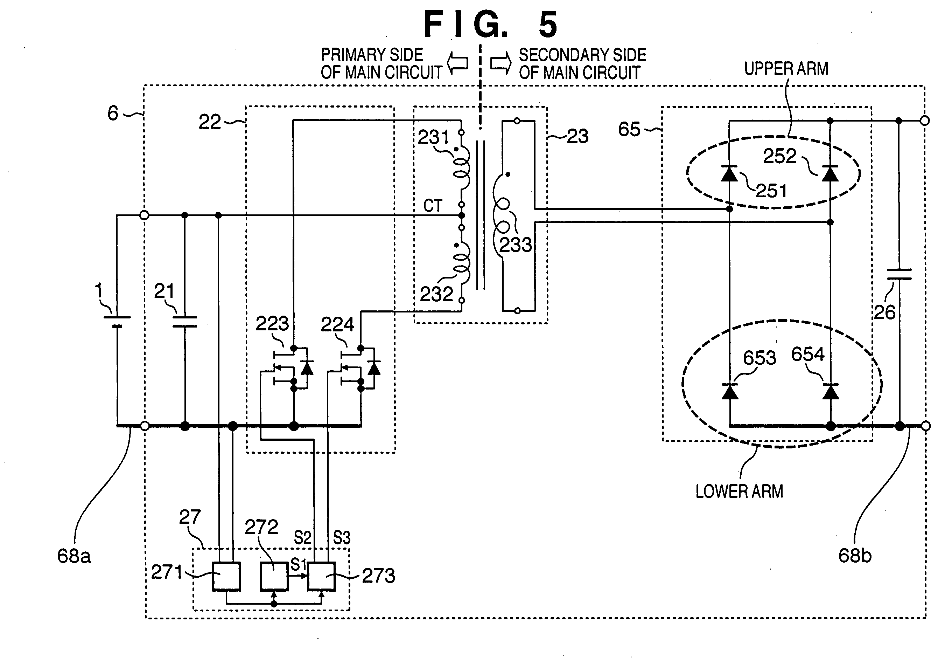

Fig. 5 is a view of a conventional power converter 6. A DC power supply 1 is a known public DC voltage source. The power converter 6 is a known public push-pull circuit mainly including a capacitor 21, main conversion circuit 22, transformer 23, rectifying circuit 65, capacitor 26, and control circuit 27.

The capacitors 21 and 26 which smooth the input and output voltages of the power converter 6 are connected between the input and output terminals. The main conversion circuit 22 is a primary-side main conversion circuit of the power converter 6 and includes MOSFETs 223 and 224. The main conversion circuit 22 receives the DC power from the DC power supply 1 and outputs an AC power having a rectangular waveform to the transformer 23. The source electrodes of the MOSFETs are connected to a low-side line 68a.

The transformer 23 is an input/output insulated push-pull transformer applied to a known public push-pull circuit. The transformer 23 receives the AC power having a rectangular waveform, which is output from the main conversion circuit 22, and outputs the AC power having a rectangular waveform to the rectifying circuit 65. The coil of the transformer 23 is formed from primary and secondary coils. More specifically, the primary coil includes coils 231 and 232, i.e., a set of series-connected identical coils. The series connection point between the coils is extracted as the center tap (to be referred to as a CT hereinafter) of the primary coil. The CT is connected to the positive electrode of the DC power supply 1. The terminals of the coils 231 and 232, which are on the opposite sides of the CT, are connected to the drain electrodes of the MOSFETs 223 and 224. A secondary coil 233 is connected to the rectifying circuit 65.

The rectifying circuit 65 is a full-bridge rectifying circuit which rectifies the AC power output from the transformer 23 and outputs the AC power as the output from the power converter 6. The rectifying circuit 65 includes diodes 251, 252, 653, and 654. The control circuit 27 is a control circuit for the power converter 6 and includes a control power supply unit 271, pulse generation unit 272, and gate driving unit 273.

The control power supply unit 271 receives the DC power (i.e., the DC power from the DC power supply 1) on the primary side of the power converter 6 and supplies the power to the pulse generation unit 272 and gate driving unit 273. The pulse generation unit 272 outputs a pulse signal S1 to the gate driving unit 273. The gate driving unit 273 receives the pulse signal S1 and outputs gate driving signals S2 and S3 to the gates of the MOSFETs 223 and 224.

In the conventional power converter 6, the output power from the transformer is rectified by the diodes, as shown in Fig. 5.

Although the diodes can rectify the power without control, power loss due to a drop in forward voltage is large, resulting in a decrease in efficiency of the power converter.

### SUMMARY OF THE INVENTION

A power converter according to the present invention comprises a transformer, a full-bridge rectifying circuit which is located on a secondary side of the transformer and has at least a pair of self-arc-suppressing elements which are driven while being inverted, connection means for connecting a negative-pole-side connection line on a primary side of the transformer to a negative-pole-side connection line on the secondary side of the transformer, and a control circuit which is commonly used to drive circuits on the primary side and secondary side of the transformer, wherein the self-arc-suppressing elements are driven by the control circuit.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

The accompanying drawings, which are incorporated in and constitute a part of the specification, illustrate embodiments of the invention and, together with the description, serve to explain the principles of the invention.
Fig. 1 is a view showing an arrangement of a power converter 2 according to the embodiment of the present invention;
Fig. 2 is a view showing an arrangement of a power converter 3 according to the first embodiment of the present invention;
Fig. 3 is a view showing an arrangement of a power converter 4 according to the second embodiment of the present invention;
Fig. 4 is a view showing an arrangement of a power converter 5 according to the third embodiment of the present invention; and
Fig. 5 is a view of a conventional power converter 6.

### DETAILED DESCRIPTION OF THE PREFERRED EMBODIMENTS

Preferred embodiments of the present invention will now be described in detail in accordance with the accompanying drawings.

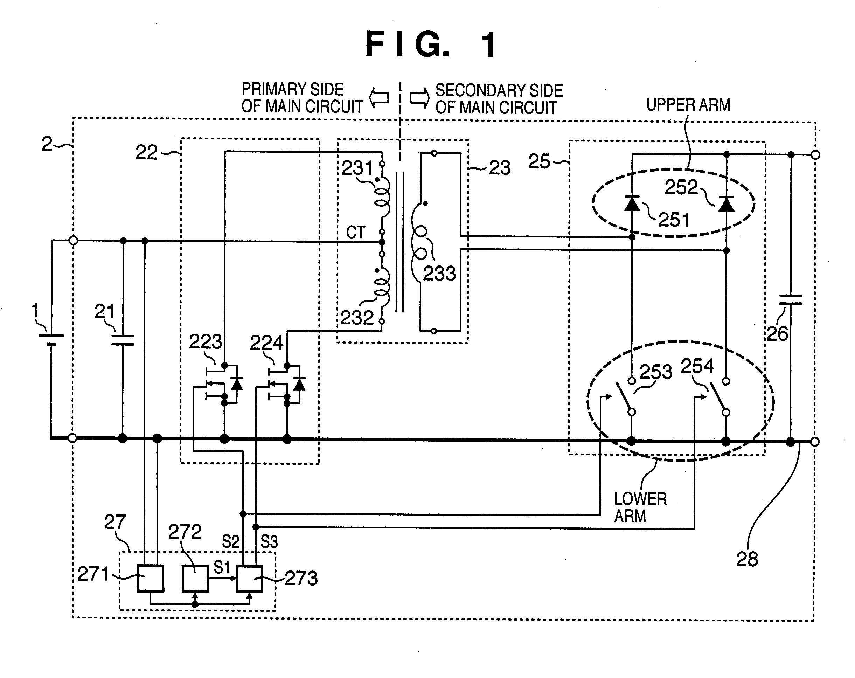

Fig. 1 is a view showing an arrangement of a power converter 2 according to the present invention. The power converter 2 of this embodiment is different from the power converter 6 shown in Fig. 5 in the rectifying circuit. More specifically, the power converter 2 uses a rectifying circuit 25 in place of the rectifying circuit 65. In addition, the negative-pole-side connection lines (to be referred to as low-side lines or negative lines hereinafter) on the primary and secondary sides of the power converter 2 are connected to form a low-side line 28. The embodiments of the present invention will be described below with an emphasis on these different points.

The rectifying circuit 25 is a full-bridge rectifying circuit which rectifies an AC power having a rectangular waveform, which is output from a transformer 23. The upper arm of the rectifying circuit 25 includes diodes 251 and 252 serving as non-self-arc-suppressing elements. The lower arm includes SWs 253 and 254 serving as self-arc-suppressing elements. The SWs 253 and 254 are driven by gate driving signals S2 and S3, respectively. The gate driving signals S2 and S3 have inverted phases.

As described above, in the power converter 2 according to this embodiment, synchronous rectification is introduced to the lower arm of the rectifying circuit 25. When self-arc-suppressing elements whose drop in forward voltage is smaller than that of diodes are used for synchronous rectification, a power converter having a higher conversion efficiency than the prior art shown in Fig. 5 can be provided.

However, when a control circuit is added to independently control the SWs 253 and 254, the size of the control circuit becomes large. This impedes size reduction of the device itself. To prevent this, in the power converter 2 according to this embodiment, the low-side lines on the primary and secondary sides of the main circuit (transformer) are connected to form the low-side line 28. Accordingly, the self-arc-suppressing elements of the lower arm of the rectifying circuit 25 can be driven by using a control power supply unit 271 as a common power supply. Hence, any new power supply need not be prepared to execute the synchronous rectification, and the control system circuit becomes very simple.

This embodiment is not limited to the above-described arrangement. It is only necessary that in a power converter including a transformer and a full-bridge circuit arranged on the secondary side of the transformer, the low-side line on the primary side of the transformer and that on the secondary side of the transformer are connected, the SW elements of the lower arm of the full-bridge circuit are formed from at least self-arc-suppressing elements, and the self-arc-suppressing elements are driven by a control power supply arranged on the primary side of the transformer. The gate driving signals which drive the self-arc-suppressing elements of the rectifying circuit need not perfectly synchronize with the gate driving signal on the primary side. In this embodiment, the primary side is the input side, and the secondary side is the output side. However, the secondary side in this embodiment may be used as the input, and the primary side may be used as the output. In this embodiment, the control power supply is arranged on the primary side. Instead, the control power supply may be arranged on the secondary side.

### [First Embodiment]

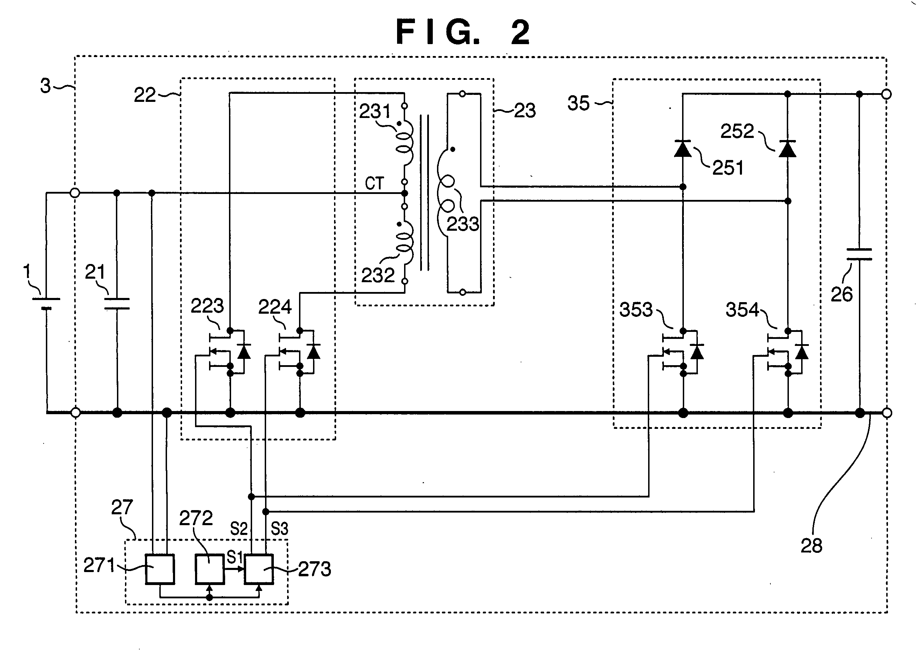

An embodiment of the present invention will be described with reference to Figs. 1 and 2.

Fig. 2 is a view of a power converter 3 according to an embodiment of the present invention. The power converter 3 of this embodiment is different from the above-described embodiment in using a rectifying circuit 35 in place of the rectifying circuit 25.

More specifically, the rectifying circuit 35 is a full-bridge rectifying circuit including diodes 251 and 252 and MOSFETs 353 and 354. The lower arm uses the MOSFETs as synchronous rectification elements.

The MOSFETs 353 and 354 can be regarded as a pair of self-arc-suppressing elements which are driven by gate driving signals S2 and S3 while being inverted. The diodes 251 and 252 can be regarded as a pair of non-self-arc-suppressing elements in the full-bridge rectifying circuit.

In the above arrangement, each MOSFET in a main conversion circuit 22 converts a DC power from a DC power supply 1 into an AC power having a rectangular waveform and outputs the AC power to a transformer 23. Each MOSFET in the rectifying circuit 35 full-wave-rectifies the AC power output from the transformer 23 by operating in synchronism with the AC power and outputs the AC power as the output from the power converter 3.

As described above, in the power converter 3 of this embodiment, a self-arc-suppressing element of the same type as the SW element in the power converter 2 is used as a synchronous rectification element in the rectifying circuit 35. Hence, the gate driving signals S2 and S3 can directly be used as the driving signals for the synchronous rectification elements.

In addition, in the power converter according to this embodiment, synchronous rectification is introduced to at least the lower arm of the rectifying circuit. When MOSFETs as a kind of self-arc-suppressing element whose drop in forward voltage is generally smaller than that of diodes are used for synchronous rectification, a power converter having a higher conversion efficiency than the prior art shown in Fig. 5 can be provided.

Furthermore, in the power converter of the present invention, the low-side lines on the primary and secondary sides of the main circuit (transformer) are connected. Accordingly, the MOSFETs of the lower arm of the rectifying circuit on the secondary side can be driven by using the control power supply on the primary side as a common power supply. Hence, any new power supply need not be prepared to execute the synchronous rectification, and the control system circuit can be made very simple.

### [Second Embodiment]

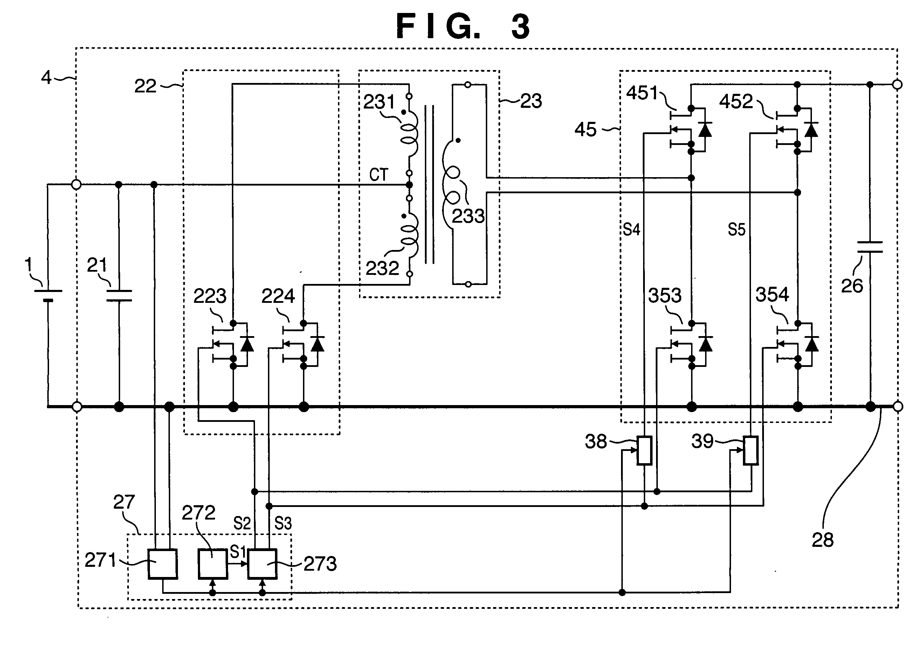

Another embodiment of the present invention will be described below with reference to Figs. 2 and 3.

Fig. 3 is a view of a power converter 4 according to another embodiment of the present invention. The power converter 4 is different from the above-described power converter 3 shown in Fig. 2 mainly in using a rectifying circuit 45 in place of the rectifying circuit 35.

More specifically, the upper arm of the rectifying circuit 45 uses MOSFETs 451 and 452.

A gate driving unit 273 outputs a gate driving signal S2 to a high-side driver 39 and MOSFETs 223 and 353 whose source electrodes are connected to a low-side line 28. Similarly, the gate driving unit 273 outputs a gate driving signal S3 to a high-side driver 38 and MOSFETs 224 and 354.

The high-side drivers 38 and 39 are circuits which drive the gates of the upper arm, for which the gate driving reference potential (source potential) is different from the reference potential for the lower arm. More specifically, the high-side drivers 38 and 39 apply a DC bias to the received gate driving signals S3 and S2 so that the zero potential of the gate driving signals coincides with the potentials of the source electrodes of the MOSFETs 451 and 452. The power for the high-side drivers 38 and 39 can be supplied from a control power supply 271. The high-side drivers 38 and 39 output gate driving signals S4 and S5 synchronized with the gate driving signals S3 and S2.

As described above, in the power converter 4 according to this embodiment, the low-side lines on the primary and secondary sides of the main circuit (transformer) are connected. Accordingly, as in the first embodiment, the MOSFETs of the lower arm of the rectifying circuit 45 can be driven by using the control power supply unit 271 as a common power supply. In addition, since synchronous rectification is introduced to all components of the rectifying circuit 35, a power converter having a very high conversion efficiency can be provided.

### [Third Embodiment]

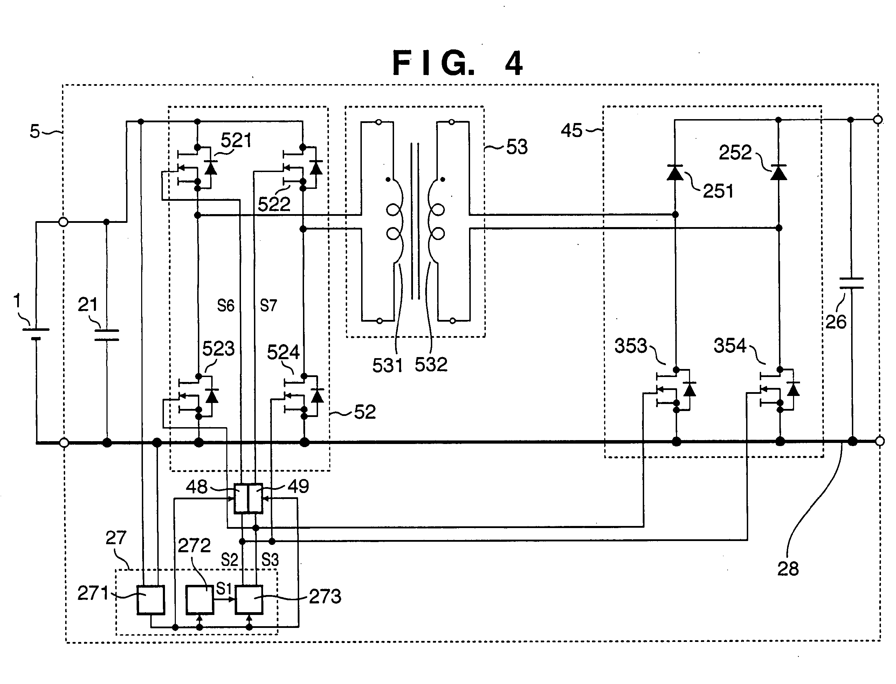

Still another embodiment of the present invention will be described below with reference to Figs. 2 and 4.

Fig. 4 is a view of a power converter 5 according to still another embodiment of the present invention. The power converter 5 is different from the above-described power converter 3 shown in Fig. 2 mainly in the structures of the main conversion circuit and transformer. More specifically, the power converter 5 is different from the power converter 3 in using a main conversion circuit 52 and transformer 53 in place of the main conversion circuit 22 and transformer 23.

The main circuit 52 is a full-bridge inverter circuit which is arranged on the input side of the transformer to receive a power from a DC power supply 1 and output an AC power having a rectangular waveform to the transformer 23. The main conversion circuit 52 includes MOSFETS 521, 522, 523, and 524. high-side drivers 48 and 49 are gate driving circuits having the same function as that of the above-described high-side drivers 38 and 39. The high-side drivers 48 and 49 apply a DC bias to received gate driving signals S2 and S3 and output gate driving signals S6 and S7 to the gates of the MOSFETS 521 and 522 so that the zero potential of the gate driving signals coincides with desired potentials of the source electrodes of the MOSFETs 521 and 522. The power for the high-side drivers 48 and 49 can be supplied from a control power supply 271.

As described above, the power converter according to the present invention can be applied independently of the main circuit scheme.

According to the present invention, a power converter which reduces the drop in forward voltage to ensure a high conversion efficiency can be provided.

According to the power converter of the present invention, the rectifying circuit on the secondary side can be driven by using the control power supply on the primary side as a common power supply. Hence, any new power supply need not be prepared to execute synchronous rectification. Since the control system circuit can be simplified, the scale of the device can greatly be reduced.

As many apparently widely different embodiments of the present invention can be made without departing from the spirit and scope thereof, it is to be understood that the invention is not limited to the specific embodiments thereof except as defined in the appended claims.

A power converter includes a transformer, a full-bridge rectifying circuit which is located on the secondary side of the transformer and has at least a pair of self-arc-suppressing elements which are driven while being inverted, connection means which connects the negative-pole-side connection line on the primary side of the transformer to that on the secondary side of the transformer, and a control circuit which is commonly used to drive circuits on the primary and secondary sides of the transformer. The self-arc-suppressing elements are driven by the control circuit.

## Claims

1. A power converter **characterized by** comprising:
a transformer (23);
a full-bridge rectifying circuit (25, 35, 45) which is located on a secondary side of said transformer and has at least a pair of self-arc-suppressing elements (253, 254, 353, 354) which are driven while being inverted;
connection means (28) for connecting a negative-pole-side connection line on a primary side of said transformer to a negative-pole-side connection line on the secondary side of said transformer; and
a control circuit (27) which is commonly used to drive circuits on the primary side and secondary side of said transformer,
wherein the self-arc-suppressing elements are driven by said control circuit.

2. The converter according to claim 1, **characterized in that** said control circuit receives a power supplied from the circuit on the primary side of said transformer.

3. The converter according to claim 1 or 2, **characterized in that** in said full-bridge rectifying circuit, another pair of elements are formed from non-self-arc-suppressing elements (251, 252).

4. The converter according to claim 1 or 2, **characterized in that** in said full-bridge rectifying circuit, another pair of elements which are driven while being inverted are formed from self-arc-suppressing elements (451, 452).

5. The converter according to any one of claims 1 to 4, **characterized in that** said transformer comprises a full-bridge inverter circuit (52) as an input stage.

6. A power converter **characterized by** comprising:
a transformer (23);
a full-bridge rectifying circuit (45) which is located on a secondary side of said transformer and has a first self-arc-suppressing element (451), a second self-arc-suppressing element (452), a third self-arc-suppressing element (353), and a fourth self-arc-suppressing element (354);
connection means (28) for connecting a negative-pole-side connection line on a primary side of said transformer to a negative-pole-side connection line on the secondary side of said transformer; and
a control circuit (27) which is commonly used to drive circuits on the primary side and secondary side of said transformer,
wherein the first and fourth self-arc-suppressing elements are driven on the basis of a first driving signal (S3) from said control circuit, and
the second and third self-arc-suppressing elements are driven on the basis of a second driving signal (S2) from said control circuit.

7. The converter according to claim 6, **characterized in that** said control circuit receives a power supplied from the circuit on the primary side of said transformer.

8. The converter according to claim 6 or 7, **characterized by** further comprising a first bias circuit (38) which applies a bias to the first driving signal,
wherein the first self-arc-suppressing element is driven by the first driving signal to which the bias is applied by said first bias circuit.

9. The converter according to claim 8, **characterized by** further comprising a second bias circuit (39) which applies a bias to the second driving signal,
wherein the second self-arc-suppressing element is driven by the second driving signal to which the bias is applied by said second bias circuit.
